# EUROPÄISCHE PATENTSCHRIFT

(11) **EP 1 751 508 B1**
(45) Veröffentlichungstag und Bekanntmachung des Hinweises auf die Patenterteilung: **16.01.2008**
(21) Anmeldenummer: 05753629.4
(22) Anmeldetag: 14.05.2005
(51) Int. Cl.: G01J 3/28

(54) **VERFAHREN UND VORRICHTUNG ZUR DETEKTIERUNG OPTISCHER SPEKTREN**
METHOD AND DEVICE FOR DETECTING OPTICAL SPECTRA
PROCEDE ET DISPOSITIF POUR DETECTER DES SPECTRES OPTIQUES

(30) Priorität: 29.05.2004 DE 102004026373
(43) Veröffentlichungstag der Anmeldung: 14.02.2007
(73) Patentinhaber: Astrium GmbH, 81663 München (DE)
(72) Erfinder: HOLOTA, Wolfgang, 83646 Bad Tölz (DE); REINERT, Thido, 88048 Friedrichshafen (DE); PITTET, Jean-François, 88677 Markdorf (DE)
(74) Vertreter: Hummel, Adam
(86) Internationale Anmeldenummer: PCT/DE2005/000884
(87) Internationale Veröffentlichungsnummer: WO 2005/116595

(56) Entgegenhaltungen:
- WO-A-89/00280
- US-A- 5 638 173

## Beschreibung

Die Erfindung betrifft ein Verfahren und eine Vorrichtung zur Detektierung optischer Spektren.

Ein Spektrometer zur Detektierung optischer Spektren besteht prinzipiell aus einer Diffraktionseinrichtung, mit welcher ein Einfallsstrahl der zu untersuchenden optischen Strahlung spektral zerlegt wird und einer Detektionseinrichtung, mit welcher die Strahlung spektral aufgelöst erfasst wird. Soll das optische Spektrum über einen größeren Spektralbereich erfasst werden, so ist dies ohne zusätzliche Maßnahmen meist nicht möglich. Entweder werden für verschiedene Spektralbereiche jeweilige einzelne Spektrometer verwendet oder die verschiedenen Spektralbereiche innerhalb des Spektrometers unterschiedlich verarbeitet.

Aus der US 5 638 173 ist eine Vorrichtung zur Detektierung optischer Spektren, ein Spektrometer, bekannt, bei der im Strahlengang eines Einfallsstrahls eine Diffraktionseinrichtung in Form eines optischen Gitters vorgesehen ist. Mittels einer aus zwei Spaltfiltern und einem Umlenkspiegel bestehenden Anordnung, die im Strahlengang nach dem Diffraktionsgitter angeordnet ist, werden drei verschiedenen Spektralbereichen zugeordnete Teilstrahlen erzeugt, die nach dem Durchlaufen einer gemeinsamen Spektrometeroptik in einer Detektoreinrichtung jeweils räumlich getrennt erfasst werden. Auf Grund der räumlichen Trennung der Teilstrahlen muss die Spektrometeroptik mit großen optischen Komponenten, d.h. großen Linsen aufgebaut sein, womit ein hohes Gewicht und hohe Kosten verbunden sind.

Auch ist es bekannt, bei Spektrometern "Revolver" mit unterschiedlichen Gittern vorzusehen, so dass nur ein Strahlengang in der Spektrometeroptik verarbeitet werden muss. Damit können die verschiedenen Spektralbereiche aber nicht gleichzeitig, sondern nur sequentiell gemessen werden, und es ist außerdem ein zusätzlicher hochpräziser Mechanismus zum Wechseln der Gitter erforderlich.

Die Aufgabe der Erfindung ist es Verfahren und Vorrichtung zur Detektierung optischer Spektren anzugeben, bei denen bei kleinem Bauvolumen und bei geringem Gewicht des Spektrometers ein großer Spektralbereich verarbeitet werden kann.

Diese Aufgabe wird verfahrensmäßig durch das im Anspruch 1 angegebene Verfahren zur Detektierung optischer Spektren gelöst.

Vorrichtungsmäßig wird die gestellte Aufgabe durch die im Anspruch 6 angegebene Vorrichtung zur Detektierung optischer Spektren gelöst.

Jeweilige vorteilhafte Ausgestaltungen der Erfindung sind in den Unteransprüchen angegeben.

Durch die Erfindung wird ein Verfahren zur Detektierung optischer Spektren geschaffen, bei dem aus einem Einfallsstrahl erzeugte, zwei oder mehr verschiedenen Spektralbereichen zugeordnete Teilstrahlen eine gemeinsame Spektrometeroptik durchlaufen und räumlich getrennt detektiert werden. Erfindungsgemäß ist es vorgesehen, dass die aus dem Einfallsstrahl erzeugten Teilstrahlen auf jeweilige räumlich getrennte, im Strahlengang virtuell überlagerte, den verschiedenen Spektralbereichen zugeordnete Diffraktionsgitter gelenkt und nach dem Passieren der Diffraktionsgitter zu einem die gemeinsame Spektrometeroptik durchlaufenden gemeinsamen Strahlengang zusammengefasst werden.

Vorzugsweise werden die den verschiedenen Spektralbereichen zugeordneten Teilstrahlen nach dem Durchlaufen der gemeinsamen Spektrometeroptik spektral getrennt und in räumlich getrennten, den verschiedenen Spektralbereichen zugeordneten Detektoren erfasst.

Gemäß einer bevorzugten Ausführungsform des erfindungsgemäßen Verfahrens ist es vorgesehen, dass die Teilstrahlen bei ihrer Erzeugung aus dem Einfallsstrahl spektral getrennt werden.

Weiterhin ist es vorzugsweise vorgesehen, dass der Einfallstrahl und die zu dem gemeinsamen Strahlengang zusammengefassten Teilstrahlen dieselbe Spektrometeroptik durchlaufen. Es kann aber in Abhängigkeit von der Anwendung aus technischen Gründen vorteilhaft sein, getrennte Spektrometeroptiken zu verwenden, d.h. eine Spektrometeroptik für den Einfallstrahl und eine davon getrennte. Spektrometeroptik für die zu dem gemeinsamen Strahlengang zusammengefassten Teilstrahlen.

Gemäß einer besonders bevorzugten Ausführungsform des erfindungsgemäßen Verfahrens ist es vorgesehen, dass aus dem Einfallsstrahl drei spektral getrennte Teilstrahlen erzeugt, diese auf drei im Strahlengang virtuell überlagerte Diffraktionsgitter gelenkt und nach dem Durchlaufen der gemeinsamen Spektrometeroptik in drei, den jeweiligen Spektralbereichen zugeordneten Detektoren erfasst werden.

Weiterhin wird durch die Erfindung eine Vorrichtung zur Detektierung optischer Spektren geschaffen, enthaltend eine im Strahlengang eines Einfallsstrahls angeordnete Diffraktionseinrichtung, eine von zwei oder mehr, verschiedenen Spektralbereichen zugeordneten, aus dem Einfallsstrahl erzeugten Teilstrahlen durchlaufene gemeinsame Spektrometeroptik und eine Detektoreinrichtung zur räumlich getrennten Detektierung der den verschiedenen Spektralbereichen zugeordneten Teilstrahlen. Erfindungsgemäß ist es vorgesehen, dass die Diffraktionseinrichtung räumlich getrennte, den verschiedenen Spektralbereichen zugeordnete Diffraktionsgitter und eine Strahlteilereinrichtung zum Teilen des Einfallsstrahls in die jeweiligen, auf die Diffraktionsgitter gelenkten Teilstrahlen und zum nachfolgenden Zusammenfassen der Teilstrahlen zu einem die gemeinsame Spektrometeroptik durchlaufenden gemeinsamen Strahlengang im Sinne einer virtuellen Überlagerung der Diffraktionsgitter enthält.

Vorzugsweise enthält die Detektoreinrichtung jeweilige, den verschiedenen Spektralbereichen zugeordnete Detektoren und eine spektrale Trenneinrichtung zum spektralen Trennen der in dem gemeinsamen Strahlengang zusammengefassten Teilstrahlen und zum Lenken derselben auf die jeweiligen Detektoren.

Gemäß einer bevorzugten Ausführungsform der erfindungsgemäßen Vorrichtung ist die Strahlteilereinrichtung zum Teilen des Eingangsstrahls in die Teilstrahlen unter spektraler Trennung derselben vorgesehen.

Weiterhin ist es vorzugsweise vorgesehen, dass die gemeinsame Spektrometeroptik im Strahlengang des Eingangsstrahls und im gemeinsamen Strahlengang der zusammengefassten Teilstrahlen angeordnet ist.

Bei einer bevorzugten Ausführungsform der erfindungsgemäßen Vorrichtung ist es vorgesehen, dass die Diffraktionseinrichtung drei im Strahlengang virtuell überlagerte Diffraktionsgitter enthält, und dass die Detektoreinrichtung drei, den jeweiligen Spektralbereichen zugeordnete Detektoren enthält.

Im folgenden werden das erfindungsgemäße Verfahren und die erfindungsgemäße Vorrichtung zur Detektierung optischer Spektren anhand eines Ausführungsbeispiels erläutert.

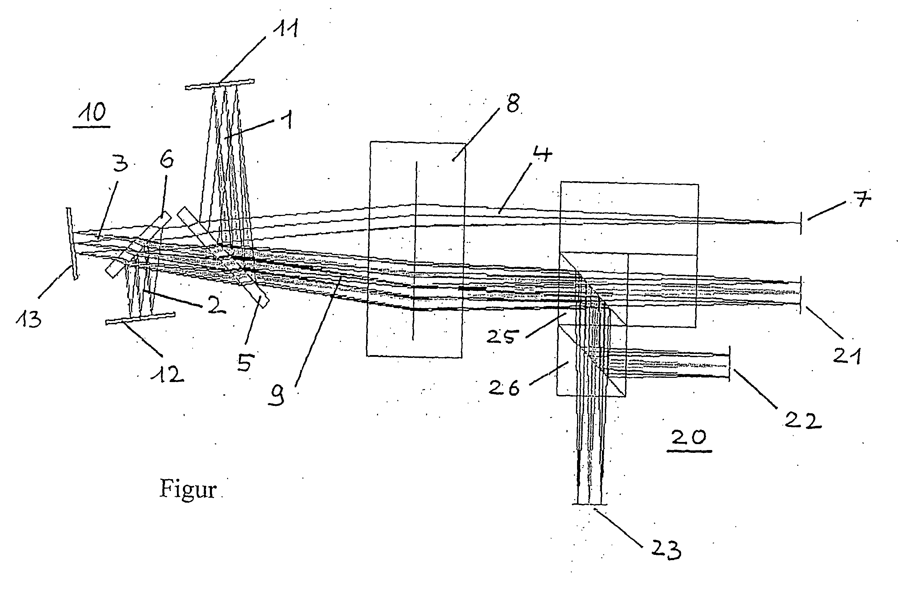

Die Figur zeigt eine schematisierte Darstellung der wesentlichen optischen Komponenten und des Strahlengangs eines Spektrometers zur Detektierung optischer Spektren, bei denen Verfahren und Vorrichtung der Erfindung gemäß einem Ausführungsbeispiel verwirklicht sind.

In der Figur ist eine Vorrichtung zur Detektierung optischer Spektren, d.h. ein Spektrometer gezeigt, bei welchem ein Einfallsstrahl 4 einer optischen Strahlung, dessen spektrale Zusammensetzung ermittelt werden soll, durch einen Eintrittsspalt 7 eintritt. Durch eine Spektrometeroptik 8, die aus einem entsprechenden Linsensystem besteht, wird der Einfallsstrahl 4 auf eine insgesamt mit dem Bezugszeichen 10 bezeichnete Diffraktionseinrichtung gelenkt.

Die Diffraktionseinrichtung 10 umfasst ein erstes Diffraktionsgitter 11, ein zweites Diffraktionsgitter 12 und ein drittes Diffraktionsgitter 13, welche durch eine einen ersten Strahlteiler 5 und einen zweiten Strahlteiler 6 enthaltende Strahlteilereinrichtung im Strahlengang des Einfallsstrahls 4 virtuell überlagert sind. Das bedeutet, durch den ersten Strahlteiler 5 wird ein Teilstrahl 1, der aus einem Teil des Einfallsstrahls 4 besteht, unter Reflektion auf das erste Diffraktionsgitter 11 gelenkt, während, der verbleibende Teil des Einfallsstrahls 4 unter Transmission durch den ersten Strahlteiler 5 hindurch zu dem zweiten Strahlteiler 6 gelangt. Von dem zweiten Strahlteiler 6 wird ein zweiter Teilstrahl 2 unter Reflektion auf das zweite Diffraktionsgitter 12 gelenkt, während der Rest des Einfallsstrahls 4 in Form eines dritten Teilstrahls 3 unter Transmission durch den zweiten Strahlteiler 6 hindurch zu dem dritten Diffraktionsgitter 13 gelangt.

Nach Beugung und damit spektraler Zerlegung der auf die jeweiligen Diffraktionsgitter 11, 12, 13 gelangten Teilstrahlen 1, 2, 3 werden diese, jetzt in disperser Form, durch die Strahlteiler 5, 6 wieder zu einem gemeinsamen Strahlengang 9 zusammengefasst. Das heißt, der das erste Diffraktionsgitter 11 verlassende Teilstrahl 1 wird durch Reflektion an dem ersten Strahlteiler 5 in den gemeinsamen Strahlengang 9 gelenkt, der von dem zweiten Diffraktionsgitter 12 kommende zweite Teilstrahl 2 wird durch Reflektion an dem zweiten Strahlteiler 6 zu dem ersten Strahlteiler 5 und unter Transmission durch diesen hindurch in den gemeinsamen Strahlengang 9 gelenkt und der von dem dritten Diffraktionsgitter 13 kommende dritte Teilstrahl 3 wird unter Transmission sowohl durch den zweiten Strahlteiler 6 als auch durch den ersten Strahlteiler 5 hindurch ebenfalls in dem gemeinsamen Strahlengang 9 gelenkt.

Die in dem gemeinsamen Strahlengang 9 zusammengefassten Teilstrahlen 1, 2, 3 passieren nun gemeinsam die Spektrometeroptik 8 und werden von dieser auf eine insgesamt mit dem Bezugszeichen 20 bezeichnete Detektoreinrichtung abgebildet.

Diese Detektoreinrichtung 20 enthält einen ersten Detektor 21, einen zweiten Detektor 22 und einen dritten Detektor 23. Zwischen die Detektoren 21, 22, 23 und die Spektrometeroptik 8 sind ein erster Spektralteiler 25 und ein zweiter Spektralteiler 26 geschaltet. Der erste Spektralteiler 25 lässt unter spektraler Zerlegung des gemeinsamen Strahlengangs 9 einen Teil desselben auf den ersten Detektor 21 hindurchtreten, während der übrige Teil unter Reflektion zu dem zweiten Spektralteiler 26 abgelenkt wird. Von diesem verbleibenden Strahl wird von dem zweiten Spektralteiler 26 wiederum ein Teil unter Reflektion auf den zweiten Detektor 22 abgelenkt, während der Rest unter Transmission zu dem dritten Detektor 23 hindurchgelassen wird.

Die spektrale Transmissions- und Reflektionscharakteristik der beiden Spektralteiler 25, 26 ist vorzugsweise so gewählt, dass zu jedem der Detektoren 21, 22, 23 jeweils ein dem ersten Teilstrahl 1 bzw. dem zweiten Teilstrahl 2 bzw. dem dritten Teilstrahl 3 entsprechender Spektralbereich des gemeinsamen Strahlengangs 9 gelangt. Auf diese Weise werden die aus dem Einfallsstrahl 4 mittels der Strahlteiler 5, 6 erzeugten Teilstrahlen 1, 2, 3 nach dem Passieren der in der Diffraktionseinrichtung 10 virtuell überlagerten Diffraktionsgitter 11, 12, 13 nach dem Durchlaufen der Spektrometeroptik 8 spektral getrennt in den auch räumlich getrennten, den verschiedenen Spektralbereichen zugeordneten Detektoren 21, 22, 23 erfasst.

Die Strahlteiler 5, 6, welche aus dem Einfallsstrahl 4 die Teilstrahlen 1, 2, 3 erzeugen, sind vorzugsweise so ausgebildet, dass bereits in ihnen die Teilstrahlen 1, 2, 3 unter entsprechender spektraler Trennung aus dem Einfallsstrahl 4 erzeugt werden. Das heißt, die jeweiligen Spektralbereiche der einzelnen Teilstrahlen 1, 2, 3 entsprechen im wesentlichen den jeweiligen Spektralbereichen der von der Spektralteilereinrichtung 25, 26 zu den einzelnen Detektoren 21, 22, 23 gelenkten Strahlbereiche.

Auf diese Weise kann, zum Beispiel, der am ersten Diffraktionsgitter 11 verarbeitete erste Teilstrahl zu dem ersten Detektor 21 gelangen, der an dem zweiten Diffraktionsgitter 12 verarbeitete zweite Teilstrahl 2 zu dem zweiten Detektor 22 gelangen und der an dem dritten Diffraktionsgitter 13 verarbeitete dritte Teilstrahl 3 zu dem dritten Detektor 23 gelangen. Dies ist unter der Voraussetzung, dass der erste Teilstrahl 1 an dem ersten Strahlteiler 5 reflektiert und an dem ersten Spektralteiler. 25 transmittiert wird, der zweite Teilstrahl 2 an dem ersten Strahlteiler 5 transmittiert und an dem zweiten Strahlteiler 6 reflektiert und sowohl an dem ersten Spektralteiler 25 als auch an dem zweiten Spektralteiler 26 reflektiert wird, und dass der dritte Teilstrahl 3 an beiden Spektralteilern 5, 6 transmittiert und an dem ersten Spektralteiler 25 reflektiert und an dem zweiten Spektralteiler 26 transmittiert wird. Bei einer Änderung des Aufbaus und/oder der Transmissions- bzw. Reflektionscharakteristik eines oder mehrerer der Strahlteilereinrichtung 5, 6 und/oder der Spektralteilereinrichtung 25, 26 wäre die Zuordnung der einzelnen Teilstrahlen 1, 2, 3 zu den einzelnen Diffraktionsgittern 11, 12, 13 und den einzelnen Detektoren 21, 22, 23 entsprechend anders.

Wie aus der Figur ersichtlich ist, verlaufen der Einfallsstrahl 4 und die zu dem gemeinsamen Strahlengang 9 zusammengefassten Teilstrahlen 1, 2, 3 dieselbe Spektrometeroptik 8, jedoch in entgegengesetzter Richtung. Das heißt, der Eintrittsspalt 7 wird durch die Spektrometeroptik 8 ins Unendliche abgebildet, wo sich die virtuell überlagerten Diffraktionsgitter 11, 12, 13 befinden, und von dort wiederum durch die Spektrometeroptik 8 auf die Detektoren 21, 22, 23 abgebildet. Sowohl der Eintrittsspalt 7 als auch die Detektoren 21, 22, 23 befinden sich bei dem dargestellten Ausführungsbeispiel also jeweils im Brennpunkt der Spektrometeroptik 8.

Bei dem dargestellten Ausführungsbeispiel enthält die Diffraktionseinrichtung 10 drei im Strahlengang virtuell überlagerte Diffraktionsgitter 11, 12, 13 und die Detektoreinrichtung 20 enthält ebenfalls drei Detektoren 21, 22, 23, die den jeweiligen Spektralbereichen zugeordnet sind. Bei anderen Ausführungsbeispielen können jedoch auch nur zwei der Diffraktionsgitter 11, 12, 13 oder eine größere Anzahl als drei und/oder auch nur zwei der Detektoren 21, 22, 23 und/oder mehr als drei Detektoren vorgesehen sein.

Unter optischen Spektren, welche erfindungsgemäß verarbeitet werden können, sollen jedwede solche verstanden werden, welche mit optischen Komponenten verarbeitet werden können.

### Bezugszeichenliste

- 1: Teilstrahl
- 2: Teilstrahl
- 3: Teilstrahl
- 4: Einfallsstrahl
- 5: Strahlteiler
- 6: Strahlteiler
- 7: Eintrittspalt
- 8: Spektrometeroptik
- 9: gemeinsamer Strahlengang
- 10: Diffraktionseinrichtung
- 11: Diffraktionsgitter
- 12: Diffraktionsgitter
- 13: Diffraktionsgitter
- 20: Detektoreinrichtung
- 21: Detektor
- 22: Detektor
- 23: Detektor
- 25: Spektralteiler
- 26: Spektralteiler

## Patentansprüche

1. Verfahren zur Detektierung optischer Spektren, bei dem aus einem Einfallsstrahl (4) erzeugte, zwei oder mehr, verschiedenen Spektralbereichen zugeordnete Teilstrahlen (1, 2, 3) eine Spektrometeroptik (8) durchlaufen und räumlich getrennt detektiert werden, **dadurch gekennzeichnet, dass** die aus dem Einfallsstrahl (4) erzeugten Teilstrahlen (1, 2, 3) auf jeweilige räumlich getrennte, im Strahlengang virtuell überlagerte, den verschiedenen Spektralbereichen zugeordnete Diffraktionsgitter (11, 12, 13) gelenkt und nach dem Passieren der Diffraktionsgitter (11, 12, 13) zu einem die Spektrometeroptik (8) durchlaufenden gemeinsamen Strahlengang (9) zusammengefasst werden.

2. Verfahren nach Anspruch 1, **dadurch gekennzeichnet, dass** die den verschiedenen Spektralbereichen zugeordneten Teilstrahlen (1, 2, 3) nach dem Durchlaufen der Spektrometeroptik (8) spektral getrennt und in räumlich getrennten, den verschiedenen Spektralbereichen zugeordneten Detektoren (21, 22, 23) erfasst werden.

3. Verfahren nach Anspruch 1 oder 2, **dadurch gekennzeichnet, dass** die Teilstrahlen (1, 2, 3) bei ihrer Erzeugung aus dem Einfallsstrahl (4) spektral getrennt werden.

4. Verfahren nach Anspruch 1, 2, oder 3, **dadurch gekennzeichnet, dass** der Einfallsstrahl (4) und die zu dem gemeinsamen Strahlengang (9) zusammengefassten Teilstrahlen (1, 2, 3) dieselbe Spektrometeroptik (8) durchlaufen.

5. Verfahren nach einem der Ansprüche 1 bis 4, **dadurch gekennzeichnet, dass** aus dem Einfallsstrahl (4) drei spektral getrennte Teilstrahlen (1, 2, 3) erzeugt, diese auf drei im Strahlengang virtuell überlagerte Diffraktionsgitter (11, 12, 13) gelenkt und nach dem Durchlaufen der Spektrometeroptik (8) in drei, den jeweiligen Spektralbereichen zugeordneten Detektoren (21, 22, 23) erfasst werden.

6. Vorrichtung zur Detektierung optischer Spektren, mit einer im Strahlengang eines Einfallsstrahls (4) angeordneten Diffraktionseinrichtung (10), einer von zwei oder mehr, verschiedenen Spektralbereichen zugeordneten, aus dem Einfallsstrahl (4) erzeugten Teilstrahlen (1, 2, 3) durchlaufenen Spektrometeroptik (8) und einer Detektoreinrichtung (20) zur räumlich getrennten Detektierung der den verschiedenen Spektralbereichen zugeordneten Teilstrahlen (1, 2, 3), **dadurch gekennzeichnet, dass** die Diffraktionseinrichtung (10) räumlich getrennte, den verschiedenen Spektralbereichen zugeordnete Diffraktionsgitter (11, 12, 13) und eine Strahlteilereinrichtung (5, 6) zum Teilen des Einfallsstrahls (4) in die jeweiligen, auf die Diffraktionsgitter (11, 12, 13) gelenkten Teilstrahlen (1, 2, 3) und zum nachfolgenden Zusammenfassen der Teilstrahlen (1, 2, 3) zu einem die Spektrometeroptik (8) durchlaufenden gemeinsamen Strahlengang (9) im Sinne einer virtuellen Überlagerung der Diffraktionsgitter (11, 12, 13) enthält.

7. Vorrichtung nach Anspruch 6, **dadurch gekennzeichnet, dass** die Detektoreinrichtung (20) jeweilige, den verschiedenen Spektralbereichen zugeordnete Detektoren (21, 22, 23) und eine spektrale Trenneinrichtung (25, 26) zum spektralen Trennen der in dem gemeinsamen Strahlengang (9) zusammengefassten Teilstrahlen (1, 2, 3) und zum Lenken derselben auf die jeweiligen Detektoren (21, 22, 23) enthält.

8. Vorrichtung nach Anspruch 6 oder 7, **dadurch gekennzeichnet, dass** die Strahlteilereinrichtung (5, 6) zum Teilen des Eingangsstrahls (4) in die Teilstrahlen (1, 2, 3) unter spektraler Trennung derselben vorgesehen ist.

9. Vorrichtung nach Anspruch 6, 7 oder 8, **dadurch gekennzeichnet, dass** die Spektrometeroptik (8) im Strahlengang des Eingangsstrahls (4) und im gemeinsamen Strahlengang (9) der zusammengefassten Teilstrahlen (1, 2, 3) angeordnet ist.

10. Vorrichtung nach einem der Ansprüche 6 bis 9, **dadurch gekennzeichnet, dass** die Diffraktionseinrichtung (10) drei im Strahlengang virtuell überlagerte Diffraktionsgitter (11, 12, 13) enthält, und dass die Detektoreinrichtung (20) drei, den jeweiligen Spektralbereichen zugeordnete Detektoren (21, 22, 23) enthält.

## Claims

1. A method for detecting optical spectra, in which two or more sub-beams (1, 2, 3), generated from an incident beam (4) and allocated to two or more different spectral ranges, travel through spectrometer optics (8) and are detected in a spatially separated way, **characterised in that** the sub-beams (1, 2, 3) generated from the incident beam (4) are guided onto diffraction gratings (11, 12, 13) which are allocated to the different spectral ranges, which are respectively spatially separated and which are virtually superimposed in the beam path, and these sub-beams are combined after passing the diffraction gratings (11, 12, 13) to form a common beam path (9) which travels through the spectrometer optics (8).

2. A method according to Claim 1, **characterised in that** the sub-beams (1, 2, 3) allocated to the different spectral ranges are recorded after travelling through the spectrometer optics (8) in a spectrally separated way and in spatially separated detectors (21, 22, 23) allocated to the different spectral ranges.

3. A method according to Claim 1 or 2, **characterised in that** the sub-beams (1, 2, 3) are spectrally separated when they are generated from the incident beam (4).

4. A method according to Claim 1, 2 or 3, **characterised in that** the incident beam (4) and the sub-beams (1, 2, 3) combined to form the common beam path (9) travel through the same spectrometer optics (8).

5. A method according to one of Claims 1 to 4, **characterised in that** three spectrally separated sub-beams (1, 2, 3) are generated from the incident beam (4), and these are guided onto three diffraction gratings (11, 12, 13) virtually superimposed in the beam path and are recorded after travelling through the spectrometer optics (8) in three detectors (21, 22, 23) allocated to the respective spectral ranges.

6. A device for detecting optical spectra, having a diffraction instrument (10) arranged in the beam path of an incident beam (4), spectrometer optics (8) through which two or more sub-beams (1, 2, 3), generated from the incident beam (4) and allocated to two or more different spectral ranges, travel, and a detector instrument (20) for spatially separated detection of the sub-beams (1, 2, 3) allocated to the different spectral ranges, **characterised in that** the diffraction instrument (10) contains spatially separated diffraction gratings (11, 12, 13) allocated to the different spectral ranges and a beam splitter instrument (5, 6) for splitting the incident beam (4) into the respective sub-beams (1, 2, 3) guided onto the diffraction gratings (11, 12, 13) and for subsequently combining the sub-beams (1, 2, 3) to form a common beam path (9) which travels through the spectrometer optics (8) in the manner of a virtual superimposition of the diffraction gratings (11, 12, 13) .

7. A device according to Claim 6, **characterised in that** the detector instrument (20) contains respective detectors (21, 22, 23) allocated to the different spectral ranges and a spectral separating instrument (25, 26) for spectrally separating the sub-beams (1, 2, 3) combined in the common beam path (9) and for guiding them onto the respective detectors (21, 22, 23).

8. A device according to Claim 6 or 7, **characterised in that** the beam splitter instrument (5, 6) is provided for splitting the input beam (4) into the sub-beams (1, 2, 3) while spectrally separating them.

9. A device according to Claim 6, 7 or 8, **characterised in that** the spectrometer optics (8) are arranged in the beam path of the input beam (4) and in the common beam path (9) of the combined sub-beams (1, 2, 3).

10. A device according to one of Claims 6 to 9, **characterised in that** the diffraction instrument (10) contains three diffraction gratings (11, 12, 13) virtually superimposed in the beam path, and **in that** the detector instrument (20) contains three detectors (21, 22, 23) allocated to the respective spectral ranges.

## Revendications

1. Procédé de détection de spectres optiques selon lequel deux ou plusieurs faisceaux partiels (1, 2, 3) associés à différentes zones spectrales, provenant d'un faisceau incident (4), traversent une optique de spectromètre (8) et sont détectés de manière séparée dans l'espace,
**caractérisé en ce que**
les faisceaux partiels (1, 2, 3) générés à partir du faisceau incident (4) sont dirigés sur des réseaux de diffraction (11, 12, 13) séparés dans l'espace, associés aux différentes zones spectrales et virtuellement superposés dans le chemin du faisceau et, après le passage des réseaux de diffraction (11, 12, 13) les faisceaux partiels sont regroupés sur un chemin commun de faisceaux (9) traversant l'optique de spectromètre (8).

2. Procédé selon la revendication 1,
**caractérisé en ce que**
les faisceaux partiels (1, 2, 3) associés aux différentes zones spectrales, sont séparés spectralement après leur traversée de l'optique de spectromètre (8) et sont détectés dans des détecteurs (21, 22, 23) associés aux différentes zones spectrales et séparés dans l'espace.

3. Procédé selon les revendications 1 ou 2,
**caractérisé en ce que**
les faisceaux partiels (1, 2, 3) sont séparés spectralement par leur formation à partir du faisceau incident (4).

4. Procédé selon les revendications 1, 2 ou 3,
**caractérisé en ce que**
le faisceau incident (4) et les faisceaux partiels (1, 2, 3) regroupés sur un chemin commun de faisceaux (9) traversent la même optique spectrale (8).

5. Procédé selon l'une des revendications 1 à 4,
**caractérisé en ce qu'**
à partir du faisceau incident (4) on forme trois faisceaux partiels (1, 2, 3) spectralement distincts, on les dirige sur trois réseaux de diffraction (11, 12, 13) superposés virtuellement dans le chemin du faisceau et après la traversée de l'optique spectrométrique (8) on saisit avec trois détecteurs (21, 22, 23) associés à des zones spectrales respectives.

6. Dispositif de détection de spectres optiques comprenant une installation de diffraction (10) placée dans le chemin d'un faisceau indicent (4), une optique de spectromètre (8) traversée par deux ou plusieurs faisceaux partiels (1, 2, 3) associés à des zones spectrales différentes, issus du faisceau incident (4), ainsi qu'une installation de détecteur (20) pour détecter séparément dans l'espace les faisceaux partiels (1, 2, 3) associés aux différentes zones spectrales,
**caractérisé en ce que**
l'installation de diffraction (10) comporte des réseaux de diffraction (11, 12, 13) distincts, associés aux différentes zones spectrales et une installation de division de faisceaux (5, 6) pour diviser le faisceau incident (4) en des faisceaux partiels (1, 2, 3) respectifs dirigés sur les réseaux de diffraction (11, 12, 13) et pour réunir ensuite les faisceaux partiels (1, 2, 3) sur un chemin de faisceaux (9) commun, traversant l'optique de spectromètre (8), dans le sens d'une combinaison virtuelle des réseaux de diffraction (11, 12, 13).

7. Dispositif selon la revendication 6,
**caractérisé en ce que**
l'installation de détection (20) comporte des détecteurs (21, 22, 23) associés aux différentes zones spectrales et une installation de séparation spectrale (25, 26) pour séparer spectralement les faisceaux partiels (1, 2, 3) regroupés dans le chemin de faisceaux commun (9) et pour diriger celui-ci sur les détecteurs respectifs (21, 22, 23).

8. Dispositif selon les revendications 6 ou 7,
**caractérisé en ce que**
l'installation de division de faisceaux (5, 6) divise le faisceau incident (4) en faisceaux partiels (1, 2, 3) avec séparation spectrale.

9. Dispositif selon les revendications 6, 7, 8,
**caractérisé en ce que**
l'optique de spectromètre (8) est installée dans le chemin du faisceau incident (4) et dans le chemin de faisceaux commun (9) pour les faisceaux partiels regroupés (1, 2, 3).

10. Dispositif selon l'une des revendications 6 à 9,
**caractérisé en ce que**
l'installation de diffraction (10) comporte trois réseaux de diffraction (11, 12, 13) superposés virtuellement dans le chemin du faisceau et l'installation de détection (20) comporte trois détecteurs (21, 22, 23) associés chacun à une zone spectrale.
